# EUROPEAN PATENT APPLICATION

(11) **EP 4 821 881 A1**
(43) Date of publication of application: **14.10.2026**
(21) Application number: 25869581.6
(22) Date of filing: 09.07.2025
(51) Int. Cl.: C01B 3/02, C01B 3/00, C01C 1/04

(54) **SYSTEM AND METHOD FOR SYNTHESIZING AMMONIA USING CHEMICAL COMPRESSOR HAVING A HYDROGEN STORAGE ALLOY EMBEDDED THEREIN**

(30) Priority: 26.02.2025 KR 20250024801; 05.06.2025 KR 20250073370
(71) Applicant: Korea Zinc Co., Ltd., Seoul 03159 (KR)
(72) Inventor: KIM, Jung Woo, Ulju-gun Ulsan 45003 (KR); CHOI, Heon Sik, Nam-gu Uisan 44696 (KR); CHOI, Jae Hyung, Nam-gu Busan 48530 (KR); PARK, Gi Beom, Ulju-gun Ulsan 44978 (KR); KANG, Jeong Min, Nam-gu Ulsan 44676 (KR)
(74) Representative: Angerhausen, Christoph
(86) International application number: PCT/KR2025/010018
(87) International publication number: WO 2026/182306

(57) **Abstract**

The present invention provides an ammonia synthesis system using a chemical compressor having a built-in hydrogen storage alloy, comprising a water electrolysis stack configured to produce hydrogen, a chemical compressor configured to store and release the hydrogen supplied from the water electrolysis stack, and an ammonia synthesis part configured to receive the hydrogen from the chemical compressor and synthesize ammonia, wherein the chemical compressor includes a hydrogen storage part having the hydrogen storage alloy therein, a cooling part configured to cool the hydrogen storage part, a heating part configured to heat the hydrogen storage part, and a control part configured to control operations of the cooling part and the heating part, the heating part includes a plurality of independently-controllable different heating sources, and the control part controls the cooling part to cool the hydrogen storage alloy of the hydrogen storage part when storing the hydrogen in the hydrogen storage part and controls at least one of the plurality of heating sources of the heating part to heat the hydrogen storage alloy when releasing the hydrogen from the hydrogen storage part, and a method for synthesizing ammonia using the ammonia synthesis system.

## Description

### TECHNICAL FIELD

The present disclosure relates to an ammonia synthesis system and method using a chemical compressor with a built-in hydrogen storage alloy.

The present disclosure was derived from research conducted as part of the Energy International Joint Research Program of the Ministry of Trade, Industry and Energy. [Project Number: RS-2023-00303645, Research Project Title: Development of Green Ammonia-Based Green Hydrogen Storage Technology and Optimal Transportation Model]

### BACKGROUND ART

Ammonia is a fundamental chemical used in a variety of industrial fields, including fertilizers, chemical raw materials, pharmaceuticals, and the like. Its importance has grown significantly in recent years, particularly as its potential as a hydrogen carrier and clean fuel has been highlighted.

Most commercially used ammonia production methods today are based on the Haber-Bosch process. This process is a method of reacting nitrogen (N₂) and hydrogen (H₂) using an iron-based catalyst at a high temperature (400 to 500 degrees C) and a high pressure (150 to 300 bar) to produce ammonia (NH₃). Conventional ammonia synthesis systems utilizing the Haber-Bosch process utilize a mechanical compressor to ensure the high-temperature and high-pressure reaction between hydrogen and nitrogen.

Korean Patent Application Publication No. 10-2024-0153591 discloses an ammonia production system utilizing a reciprocating compressor as a mechanical compressor. The reciprocating compressor requires multiple compression trains, resulting in a complex manufacturing process, high costs, and a high compression unit requirement. This is because hydrogen (H₂) is a gas with a very small molecular weight, requiring more compression stages to compress it with a high pressure than typical gases. Furthermore, the mechanical operation may introduce an external air or various impurities into a gas stream, necessitating a separate Pressure Swing Adsorption (PSA) purification process to remove oxygen-containing species such as O₂, CO, CO₂ and H₂O, and other impurities from an ammonia reactor.

Korean Patent Application Publication No. 10-2024-0097909 discloses an ammonia production system utilizing a dynamic compressor such as a centrifugal compressor or the like. This system requires a multi-stage compression process for ammonia synthesis, and requires a separate seal for preventing a hydrogen gas and a nitrogen gas from leaking during the compression process. This increases initial construction costs and incurs additional maintenance and management costs associated with the additional seal.

Against this backdrop, a chemical compressor utilizing a hydrogen storage alloy may be used as an alternative to the conventional mechanical compressors. The hydrogen storage alloy has characteristics of exhibiting an exothermic reaction upon hydrogen absorption and an endothermic reaction upon hydrogen release. These characteristics enable the storage and high-pressure release of hydrogen merely by controlling the temperature. The hydrogen storage alloy can efficiently store hydrogen even at a low pressure and can release hydrogen at a high pressure of 200 to 300 bar upon heating, which provides an advantage in that high-purity high-pressure hydrogen required for ammonia synthesis can be produced without the need for separate mechanical compression. Furthermore, the chemical compressor has fewer moving parts, significantly reducing the risk of mixing impurities, and has a relatively simple design, thereby reducing initial construction and maintenance costs compared to the mechanical compressors.

Existing chemical compressor techniques primarily focuses on the storage and transportation of hydrogen itself, and the development of integrated systems that efficiently link these techniques with ammonia synthesis is insufficient. Furthermore, existing chemical compressor systems primarily rely on a single energy source for heating a hydrogen storage alloy, making it difficult to effectively respond to changes in energy availability. Therefore, there is a need for systems and methods that effectively integrate a chemical compressor having a built-in hydrogen storage alloy into ammonia synthesis systems and enable flexible utilization of various energy sources.

### DISCLOSURE

### TECHNICAL PROBLEM

Various embodiments of the present disclosure provide an ammonia synthesis system and method capable of safely producing high-pressure (200 bar to 300 bar) hydrogen through a simpler single compression method compared to mechanical compressors, using a chemical compressor with a built-in hydrogen storage alloy, and capable of reducing initial construction and maintenance costs.

Furthermore, various embodiments of the present disclosure provide an ammonia synthesis system and method capable of supplying high-purity (99.99% or more) hydrogen without a separate PSA purification process.

In addition, various embodiments of the present disclosure provide an ammonia synthesis system and method including a plurality of heating sources capable of flexibly responding to changes in energy source availability while efficiently utilizing surplus power generated in a renewable energy generator and waste heat generated in an ammonia synthesis process.

### TECHNICAL SOLUTION

One aspect of present disclosure is an ammonia synthesis system using a chemical compressor having a built-in hydrogen storage alloy, comprising: a water electrolysis stack configured to produce hydrogen; a chemical compressor configured to store and release the hydrogen supplied from the water electrolysis stack; and an ammonia synthesis part configured to receive the hydrogen from the chemical compressor and synthesizes ammonia, wherein the chemical compressor includes a hydrogen storage part having the hydrogen storage alloy therein, a cooling part configured to cool the hydrogen storage part, a heating part configured to heat the hydrogen storage part, and a control part configured to control operations of the cooling part and the heating part, the heating part includes a plurality of independently-controllable different heating sources, and the control part controls the cooling part to cool the hydrogen storage alloy of the hydrogen storage part when storing the hydrogen in the hydrogen storage part, and controls at least one of the plurality of heating sources of the heating part to heat the hydrogen storage alloy when releasing the hydrogen from the hydrogen storage part.

An embodiment of the present disclosure may provide an ammonia synthesis system, wherein the hydrogen storage part includes a pressure vessel, a hydrogen storage alloy built into the pressure vessel, a hydrogen supply pipe configured to supply the hydrogen produced from the water electrolysis stack into the pressure vessel, and a hydrogen discharge pipe configured to discharge the hydrogen released from the hydrogen storage alloy to the outside of the pressure vessel.

An embodiment of the present disclosure may provide an ammonia synthesis system, wherein the hydrogen storage alloy is a Ti-based alloy, and contains one or more transition metals selected from Mn, Zr, Cr, V, Nb, Mo, Al, Fe, Co, Ni, Cu, Sn and Si.

An embodiment of the present disclosure may provide an ammonia synthesis system, wherein the cooling part includes one or more cooling water supply lines installed in the hydrogen storage part and configured to circulate cooling water having a temperature of 10 degrees C or less.

An embodiment of the present disclosure may provide an ammonia synthesis system, wherein the heating part includes a high-pressure water heating part or a high-frequency induction heating part as the plurality of different heating sources.

An embodiment of the present disclosure may provide an ammonia synthesis system, wherein the high-pressure water heating part includes a high-pressure water circulation line installed in the hydrogen storage part, is linked to a high-pressure water supply part configured to produce high-pressure water using steam waste heat generated in the ammonia synthesis part, and is configured to heat the hydrogen storage alloy by circulating the high-pressure water supplied from the high-pressure water supply part through the high-pressure water circulation line.

An embodiment of the present disclosure may provide an ammonia synthesis system, wherein the high-pressure water has a temperature of 200 degrees C to 300 degrees C and a pressure of 16 bar to 90 bar.

An embodiment of the present disclosure may provide an ammonia synthesis system, wherein the high-frequency induction heating part includes an induction coil installed outside the chemical compressor, and the induction coil is connected to a high-frequency generator configured to receive surplus power from a renewable energy generator and configured to heat the hydrogen storage alloy with induction heat by utilizing a high-frequency induction current supplied from the high-frequency generator.

An embodiment of the present disclosure may provide an ammonia synthesis system, wherein the ammonia synthesis part includes a preheater configured to preheat the hydrogen and nitrogen supplied from the chemical compressor, a gas mixer configured to mix the preheated hydrogen and nitrogen, an ammonia synthesis reactor configured to synthesize ammonia by receiving the mixed gas produced in the gas mixer, and a condenser/gas-liquid separator configured to liquefy and separate the ammonia produced in the ammonia synthesis reactor and recover steam waste heat.

An embodiment of the present disclosure may provide an ammonia synthesis system, wherein the control part is configured to control the output of the high-pressure water heating part and the high-frequency induction heating part based on the amount of steam waste heat generated by the ammonia synthesis part and the surplus power generated by a renewable energy generator, and is configured to reduce the output of the high-frequency induction heating part when the amount of steam waste heat generated increases, and increase the output of the high-frequency induction heating part when the amount of steam waste heat generated decreases.

Another aspect of present disclosure is an ammonia synthesis method using a chemical compressor having a built-in hydrogen storage alloy, comprising: producing hydrogen using a water electrolysis stack; storing the hydrogen produced from the water electrolysis stack in a chemical compressor; releasing the hydrogen stored in the chemical compressor; and synthesizing ammonia in an ammonia synthesis part using the hydrogen supplied from the chemical compressor, wherein the storing the hydrogen in the chemical compressor includes supplying the hydrogen to a hydrogen storage part containing the hydrogen storage alloy, and cooling the hydrogen storage alloy of the hydrogen storage part by controlling a cooling part with a control part of the chemical compressor when storing the hydrogen in the hydrogen storage part, and the releasing the hydrogen stored in the chemical compressor includes heating the hydrogen storage alloy by at least one of a plurality of independently-controllable different heating sources by controlling a heating part with the control part of the chemical compressor.

An embodiment of the present disclosure may provide an ammonia synthesis method, wherein the water electrolysis stack produces hydrogen by using surplus power from a renewable energy generator through one of water electrolysis methods selected from AWE (Alkaline Water Electrolysis), PEMWE (Proton Exchange Membrane Water Electrolysis), AEMWE (Anion Exchange Membrane Water Electrolysis), and SOEC (Solid Oxide Electrolysis Cell).

An embodiment of the present disclosure may provide an ammonia synthesis method, wherein the plurality of different heating sources of the heating part performs heating by a high-pressure water heating method or a high-frequency induction heating method.

An embodiment of the present disclosure may provide an ammonia synthesis method, wherein the high-pressure water heating method heats the hydrogen storage alloy by circulating high-pressure water produced using steam waste heat generated in the ammonia synthesis part through a high-pressure water circulation line installed in the hydrogen storage part.

An embodiment of the present disclosure may provide an ammonia synthesis method, wherein the high-pressure water has a temperature of 200 degrees C to 300 degrees C and a pressure of 16 bar to 90 bar.

An embodiment of the present disclosure may provide an ammonia synthesis method, wherein the high-frequency induction heating method heats the hydrogen storage alloy with induction heat by supplying a high-frequency induction current generated from a high-frequency generator that receives surplus power from a renewable energy generator to an induction coil installed outside the chemical compressor.

An embodiment of the present disclosure may provide an ammonia synthesis method, wherein the control part is configured to control the output of the high-pressure water heating method and the high-frequency induction heating method based on the amount of steam waste heat generated by the ammonia synthesis part and the surplus power generated by a renewable energy generator, and is configured to reduce the output of the high-frequency induction heating method when the amount of steam waste heat generated increases, and increase the output of the high-frequency induction heating method when the amount of steam waste heat generated decreases.

An embodiment of the present disclosure may provide an ammonia synthesis method, wherein in the heating the hydrogen storage alloy, the heating temperature of the hydrogen storage alloy is 200 degrees C to 300 degrees C.

An embodiment of the present disclosure may provide an ammonia synthesis method, wherein the pressure of the hydrogen released from the hydrogen storage alloy is 200 bar to 300 bar.

An embodiment of the present disclosure may provide an ammonia synthesis method, wherein the synthesizing ammonia in the ammonia synthesis part by receiving the hydrogen from the chemical compressor includes preheating the hydrogen and nitrogen supplied from the chemical compressor in a preheater, mixing the preheated hydrogen and nitrogen in a gas mixer, supplying the mixed gas produced in the gas mixer to an ammonia synthesis reactor to synthesize ammonia, and liquefying and separating the ammonia produced in the ammonia synthesis reactor in a condenser/gas-liquid separator and recovering steam waste heat.

### ADVANTAGEOUS EFFECTS

According to the present disclosure in some embodiments, it is possible to provide an ammonia synthesis system and method capable of safely producing high-pressure (200 bar to 300 bar) hydrogen through a simpler single compression method compared to mechanical compressors, using a chemical compressor with a built-in hydrogen storage alloy, and capable of reducing initial construction and maintenance costs.

Furthermore, it is possible to provide an ammonia synthesis system and method capable of supplying high-purity (99.99% or more) hydrogen without a separate PSA purification process.

In addition, it is possible to provide an ammonia synthesis system and method including a plurality of heating sources capable of flexibly responding to changes in energy source availability while efficiently utilizing surplus power generated in a renewable energy generator and waste heat generated in an ammonia synthesis process.

### DESCRIPTION OF DRAWINGS

FIG. 1 is a block diagram schematically illustrating an ammonia synthesis system using a chemical compressor according to the present disclosure.
FIG. 2 is a front sectional view of a chemical compressor according to one embodiment of the present disclosure.
FIG. 3 is a block diagram specifically showing the entire components and control relationships of the ammonia synthesis system according to the present disclosure.
FIG. 4 is a schematic diagram showing steps of an ammonia synthesis method using a chemical compressor according to the present disclosure.

### MODE FOR INVENTION

Embodiments of the present disclosure are illustrated for the purpose of explaining the technical idea of the present disclosure. The scope of the rights according to the present disclosure is not limited to the embodiments presented below or the detailed descriptions of such embodiments. The technical concept of the present disclosure encompasses various modifications, equivalents, alternatives, and selective combinations of all or part of the respective embodiments of the present disclosure. Furthermore, the scope of the technical concept of the present disclosure is not limited to the various embodiments presented below or the specific descriptions thereof.

All terms including technical and scientific terms used in this specification may have the meaning generally understood by those of ordinary skill in the art to which the present disclosure pertains, unless otherwise defined.

As used in this specification, expressions such as "comprise", "may comprise", "include", "may include", "have", "may have", and the like imply the presence of a target feature (e.g., a function, operation, or component), and do not exclude the presence of other additional features. That is, such expressions are to be understood as open-ended terms having the possibility of encompassing other embodiments.

The singular form described in this specification may include a plural meaning, unless otherwise mentioned. This applies equally to the singular form recited in the claims.

Hereinafter, the present disclosure will be described with reference to the drawings.

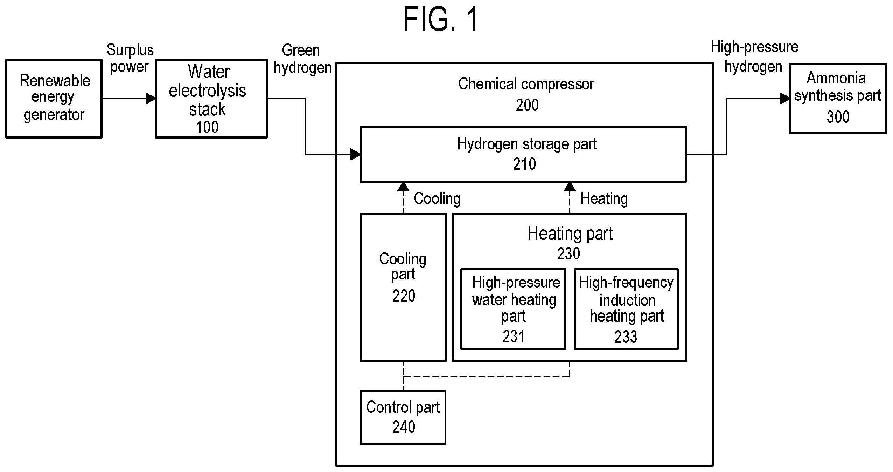

FIG. 1 is a block diagram schematically showing an ammonia synthesis system according to the present disclosure. Referring to FIG. 1, the ammonia synthesis system according to the present disclosure includes a water electrolysis stack 100 that produces hydrogen by receiving surplus power from a renewable energy generator, a chemical compressor 200 that stores and releases the hydrogen supplied from the water electrolysis stack 100, and an ammonia synthesis part 300 that receives the hydrogen from the chemical compressor 200 and synthesizes ammonia.

The renewable energy generator is a system of producing power using renewable energy such as solar and wind power. Since the output of such renewable energy generator fluctuates depending on weather conditions, urplus power that exceeds the power demand may be generated. In the present disclosure, this surplus power may be supplied to the water electrolysis stack 100 to produce green hydrogen, thereby improving energy efficiency. As used herein, the term green hydrogen refers to hydrogen produced by electrolyzing water (H₂O) using power produced from renewable energy, and is an environmentally friendly energy source that does not emit carbon dioxide during the production process thereof, unlike conventional fossil fuel-based hydrogen production systems.

The water electrolysis stack 100 is a device that electrolyzes water to separate it into hydrogen and oxygen, and may use any one of AWE (Alkaline Water Electrolysis), PEMWE (Proton Exchange Membrane Water Electrolysis), AEMWE (Anion Exchange Membrane Water Electrolysis), or SOEC (Solid Oxide Electrolysis Cell) as an electrolysis method. The water electrolysis stack 100 operates by receiving surplus power from a renewable energy generator. The produced hydrogen is directly supplied to the hydrogen storage part 210 of the chemical compressor 200.

The chemical compressor 200 includes a hydrogen storage part 210, a cooling part 220, a heating part 230, and a control part 240. The hydrogen storage part 210 is a part that stores and releases the hydrogen supplied from the water electrolysis stack 100, and has a hydrogen storage alloy 212 built therein. The hydrogen storage alloy 212 has characteristics of storing hydrogen by bonding with hydrogen to form a metal hydride, and releasing high-pressure hydrogen by decomposing the metal hydride into metal and hydrogen when heated.

The cooling part 220 is a device for removing the heat generated during the hydrogen storage process, and controls the exothermic reaction that occurs when the hydrogen storage alloy of the hydrogen storage part 210 bonds with hydrogen. The cooling part 220 according to the present disclosure efficiently cools the hydrogen storage part 210 by supplying cooling water of 10 degrees C or less.

The heating part 230 is a device that heats the hydrogen storage alloy of the hydrogen storage part 210 to release the stored hydrogen, and includes a plurality of different heating sources that can be independently controlled. As shown in FIG. 1, the heating part 230 may include a high-pressure water heating part 231 and a high-frequency induction heating part 233, which will be described later, as the plurality of different heating sources.

The control part 240 is a device that controls the operation of the chemical compressor 200, and adjusts the operations of the cooling part 220 and the heating part 230 according to the hydrogen storage and release conditions. The control part 240 controls the cooling part 220 to cool the hydrogen storage alloy 212 when storing hydrogen in the hydrogen storage part 210, and controls at least one of the plurality of heating sources of the heating part 230 to heat the hydrogen storage alloy 212 when releasing hydrogen from the hydrogen storage part 210. In particular, since the process of bonding the hydrogen storage alloy 212 with hydrogen is an exothermic reaction, the control part 240 operates the cooling part 220 to maintain an appropriate temperature, and when it is required to release hydrogen, supplies heat to the hydrogen storage alloy through the heating part 230 to promote a hydrogen separation reaction. Through the precise control of the control part 240, the hydrogen storage and release processes are efficiently performed, which makes it possible to stably operate the entire system.

High-pressure hydrogen released from the chemical compressor 200 is supplied to the ammonia synthesis part 300. The ammonia synthesis part 300 is a part that synthesizes ammonia by reacting the high-pressure hydrogen supplied from the chemical compressor 200 with high-pressure nitrogen supplied separately. The ammonia synthesis part 300 according to the present disclosure is based on the Haber-Bosch process, and synthesizes nitrogen and hydrogen into ammonia using a catalyst under conditions of a temperature of 400 degrees C to 500 degrees C and a pressure of about 200 bar.

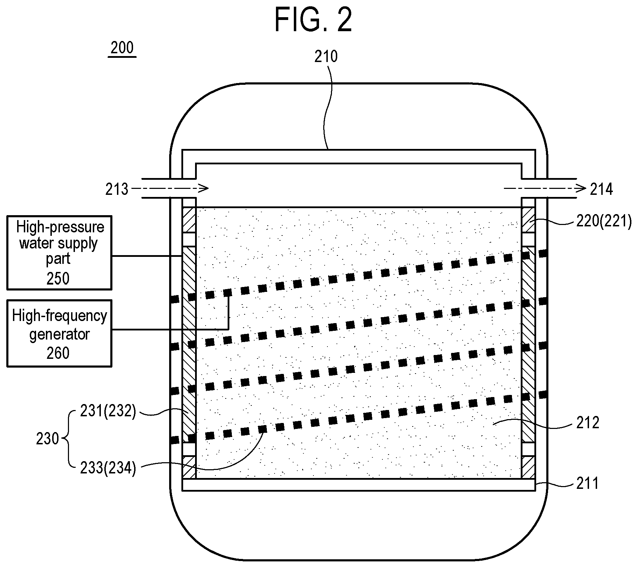

FIG. 2 is a front sectional view of a chemical compressor 200 according to one embodiment of the present disclosure.

Referring to FIG. 2, the chemical compressor 200 includes a hydrogen storage part 210 having a hydrogen storage alloy 212 built therein, a cooling part 220 for cooling the hydrogen storage part 210, and a heating part 230 for heating the hydrogen storage part 210.

The hydrogen storage part 210 includes a pressure vessel 211, a hydrogen storage alloy 212 built into the pressure vessel 211, a hydrogen supply pipe 213 that supplies the hydrogen produced from the water electrolysis stack 100 into the pressure vessel 211, and a hydrogen discharge pipe 214 that discharges the hydrogen released from the hydrogen storage alloy 212 to the outside of the pressure vessel 211.

The pressure vessel 211 is designed to withstand the high pressure generated during the hydrogen storage and release processes. As illustrated in FIG. 2, the pressure vessel 211 according to one embodiment of the present disclosure may have a double-wall structure composed of an outer wall and an inner wall. In this case, a cooling water supply line 221 and a high-pressure water circulation line 232 may be installed between the outer wall and the inner wall of the pressure vessel 211. The cooling water supply line 221 may provide a passage through which cooling water circulates to remove heat generated during hydrogen storage, and the high-pressure water circulation line 232 may provide a passage through which high-temperature, high-pressure water circulates to provide the heating required during hydrogen release. In this double-wall structure, the cooling part and the heating part can directly perform heat exchange at a position close to the hydrogen storage alloy 212, thereby improving the efficiency and safety of heat management. The pressure vessel 211 is manufactured from a material having sufficient mechanical strength for safe hydrogen storage and high-pressure hydrogen release. A material having excellent corrosion resistance and hydrogen embrittlement resistance, such as stainless steel, chromium-molybdenum alloy steel, aluminum alloy, or nickel alloy, may be used.

A hydrogen storage alloy 212 is built into the pressure vessel 211. The hydrogen storage alloy 212 is an alloy that chemically bonds with hydrogen to form a metal hydride and releases hydrogen when heated. In the present disclosure, a Ti-based alloy is used as the hydrogen storage alloy 212. Specifically, the hydrogen storage alloy 212 may be an alloy containing Ti as a main component and one or more transition metals selected from the group consisting of Mn, Zr, Cr, V, Nb, Mo, Al, Fe, Co, Ni, Cu, Sn, and Si. For example, alloys such as TiFe, TiMn₂, Ti_{0.5}Zr_{0.5}Mn₂, TiCr₂, and the like, or a combination thereof may be used.

A hydrogen supply pipe 213 is connected to one end of the hydrogen storage part 210, and a hydrogen discharge pipe 214 is connected to the other end thereof. The hydrogen supply pipe 213 is a pipe that supplies the hydrogen produced from the water electrolysis stack 100 to the inside of the pressure vessel 211. The hydrogen supplied through the hydrogen supply pipe 213 reacts with the hydrogen storage alloy 212 in the pressure vessel 211 to form a metal hydride. The hydrogen discharge pipe 214 is a pipe that discharges the hydrogen released from the hydrogen storage alloy 212 to the outside of the pressure vessel 211 and supplies it to the ammonia synthesis part 300.

The cooling part 220 of the chemical compressor 200 is installed in the hydrogen storage part 210, and includes one or more cooling water supply lines 221. Since the process in which the hydrogen storage alloy 212 reacts with hydrogen to form a metal hydride is an exothermic reaction, temperature control is essential for efficient reaction and safe operation during hydrogen storage. Therefore, cooling water having a temperature of 10 degrees C or less is supplied through a cooling water supply pipe (not shown) and circulated in the cooling water supply line 221, thereby controlling a continuous increase in the temperature of the hydrogen storage alloy 212. As illustrated in FIG. 2, the cooling water supply line 221 according to one embodiment of the present disclosure may be installed at the upper and lower portions of the pressure vessel 211, and may be configured to circulate the cooling water by utilizing a space between the outer wall and the inner wall as a water jacket. The cooling system with such a water jacket structure can minimize the heat transfer distance between the cooling water and the hydrogen storage alloy 212 and can secure a large heat exchange area, thereby improving cooling efficiency. Specifically, the annular space formed between the outer wall and the inner wall of the pressure vessel 211 is utilized as a cooling water supply line 221. The cooling water is introduced through the inlet (not shown) of this line, circulated through the upper and lower portions to absorb the heat of the hydrogen storage alloy 212 through the inner wall, and then discharged through the outlet (not shown). When the cooling water supply line 221 is installed at the upper and lower portions of the pressure vessel 211, the entire hydrogen storage alloy 212 can be uniformly cooled while avoiding physical interference with the high-pressure water circulation line 232, thereby efficiently controlling the temperature of the hydrogen storage alloy 212 during hydrogen storage. However, the installation position of the cooling water supply line 221 is not limited to the present embodiment and may be variously changed. For example, the pressure vessel 211 may be divided into several sections, and the cooling water supply line 221 may be installed in the section excluding the section in which the high-pressure water circulation line 232 is installed. This section-by-section installation method can completely eliminate direct interference with the heating part 230 and can improve cooling efficiency.

The heating part 230 of the chemical compressor 200 may include a high-pressure water heating part 231 and a high-frequency induction heating part 233 as a plurality of different heating sources. The high-pressure water heating part 231 includes a high-pressure water circulation line 232, and the high-frequency induction heating part 233 includes an induction coil 234. The two heating parts are independently controllable and are operated complementarily to efficiently release hydrogen from the hydrogen storage alloy 212.

The high-pressure water heating part 231 is a heating system that utilizes the steam waste heat generated in the ammonia synthesis part 300 to be described later. The high-pressure water heating part 231 includes a high-pressure water circulation line 232 installed in the hydrogen storage part 210. The high-pressure water heating part 231 is linked to a high-pressure water supply part 250 that produces high-pressure water using the steam waste heat generated in the ammonia synthesis part 300, and is configured to heat the hydrogen storage alloy 212 by circulating the high-pressure water supplied from the high-pressure water supply part 250 through the high-pressure water circulation line 232. The high-pressure water circulation line 232 is made of an alloy having excellent heat resistance, pressure resistance, and corrosion resistance, such as stainless steel or the like, so as to withstand high temperatures and high pressures. For example, as illustrated in FIG. 2, the high-pressure water circulation line 232 may be installed in the form of a water jacket in the space between the outer wall and the inner wall of the pressure vessel 211. In the case of the water jacket type, high-pressure water circulates in the annular space between the outer wall and the inner wall of the pressure vessel 211 to transfer heat to the hydrogen storage alloy 212 through the inner wall. This water jacket structure has the advantage of providing a uniform heat distribution and enabling consistent heating throughout the vessel. However, the installation method and location of the high-pressure water circulation line 232 are not limited to this embodiment and may be variously changed. For example, the high-pressure water circulation line 232 may be installed in a pipe form between the outer wall and the inner wall of the pressure vessel 211. The pipe-type high-pressure water circulation line 232 may be arranged in a spiral or straight structure to perform indirect heat exchange with the hydrogen storage alloy 212 through the inner wall. The high-pressure water circulation line 232 circulates high-pressure water supplied from the high-pressure water supply part 250 to heat the hydrogen storage alloy 212. In the high-pressure water supply part 250, the steam waste heat generated in the condenser/gas-liquid separator 340 of the ammonia synthesis part 300 is transferred to water through a heat exchanger, and then the heated water is pressurized by a high-pressure pump system to produce high-pressure water. At this time, the high-pressure water may have a temperature of 200 degrees C to 300 degrees C and a pressure of 16 bar to 90 bar. Due to the high heat capacity and thermal conductivity of the high-pressure water, the hydrogen storage alloy 212 can be efficiently heated.

The high-frequency induction heating part 233 is a heating system that directly heats the hydrogen storage alloy 212 through an electromagnetic induction phenomenon by utilizing surplus power from a renewable energy generator. The high-frequency induction heating part 233 includes an induction coil 234 installed outside the chemical compressor 200. The induction coil 234 is connected to a high-frequency generator 260 that receives surplus power from the renewable energy generator, and is configured to heat the hydrogen storage alloy 212 with induction heat by utilizing a high-frequency induction current supplied from the high-frequency generator 260. For example, the induction coil 234 may be made of copper, and may be installed to be spirally wound around the outside of the chemical compressor 200 to form a uniform magnetic field in the pressure vessel 211. The high-pressure water circulation line 232 is installed between the outer wall and the inner wall of the pressure vessel 211, and the induction coil 234 is installed outside the chemical compressor 200, so that they are physically separated from each other. At this time, the induction coil 234 heats the hydrogen storage alloy 212 through electromagnetic induction outside the chemical compressor 200, and the high-pressure water circulation line 232 heats the hydrogen storage alloy 212 by circulating high-temperature high-pressure water supplied from the high-pressure water supply part 250. The hydrogen storage alloy 212 can be heated efficiently and uniformly through a combination of the two heating methods. The high-frequency generator 260 receives surplus power from the renewable energy generator and generates high-frequency induced current. When the high-frequency induced current flows through the induction coil 234, an alternating magnetic field is formed around the coil. This magnetic field induces an eddy current within the pressure vessel 211 and the hydrogen storage alloy 212, and the eddy current is converted into heat by the electrical resistance of the material. In the case of a magnetic material, hysteresis loss due to magnetization reversal also generates additional heat. Through this induction heating process, the hydrogen storage alloy 212 and the pressure vessel 211 themselves become heating elements to generate heat, which makes it possible to perform direct and efficient heating.

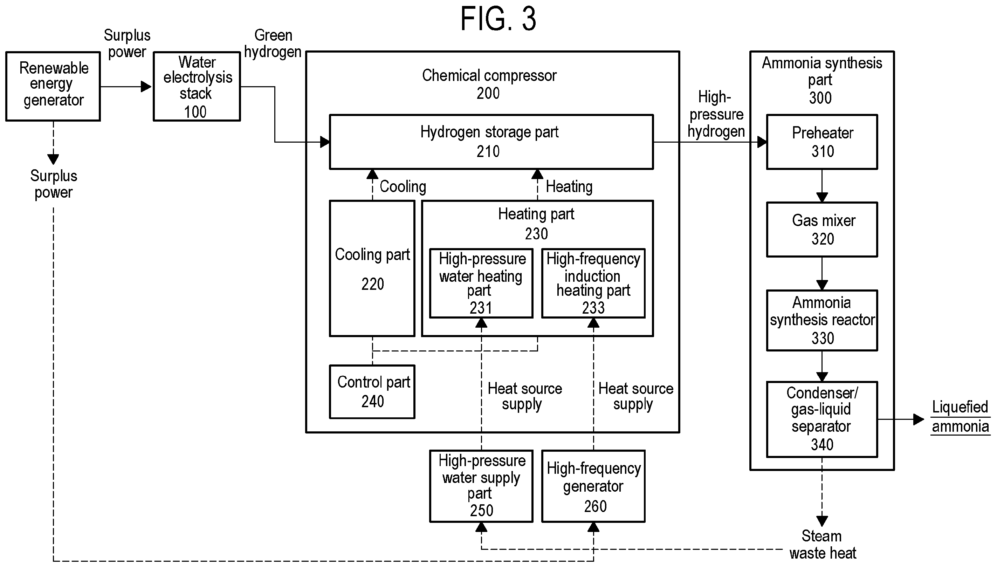

FIG. 3 is a block diagram specifically illustrating the entire components and control relationships of the ammonia synthesis system according to the present disclosure.

Referring to FIG. 3, the ammonia synthesis system according to the present disclosure includes a water electrolysis stack 100 that produces hydrogen by receiving surplus power from a renewable energy generator, a chemical compressor 200 that stores and releases hydrogen supplied from the water electrolysis stack 100, and an ammonia synthesis part 300 that receives hydrogen from the chemical compressor 200 and synthesizes ammonia. The ammonia synthesis part 300, which is illustrated on the right side in FIG. 3, includes a preheater 310, a gas mixer 320, an ammonia synthesis reactor 330, and a condenser/gas-liquid separator 340. The ammonia synthesis part 300 efficiently synthesizes ammonia using high-purity high-pressure hydrogen supplied from the chemical compressor 200.

The preheater 310 is a device that preheats high-pressure hydrogen supplied from the chemical compressor 200 and high-pressure nitrogen supplied separately. Since the ammonia synthesis reaction generally takes place at a temperature of 400 to 500 degrees C, it is necessary to preheat the gas supplied to the ammonia synthesis reactor 330. The preheater 310 according to the present disclosure may use a mixed gas of hydrogen and air or a mixed gas of hydrogen, ammonia, and air as a combustion gas. The hydrogen and nitrogen are preheated using the heat generated by combustion of this combustion gas within the preheater 310. In particular, the economic feasibility of the process can be improved by recycling the gaseous ammonia separated in the condenser/gas-liquid separator 340 described below as the combustion gas. In addition, by using hydrogen and ammonia-based combustion gas, carbon-free heating that does not emit any carbon dioxide is possible, unlike the existing preheating method using fossil fuels.

The gas mixer 320 is a device that mixes preheated hydrogen and nitrogen at a ratio suitable for ammonia synthesis. Generally, the ammonia synthesis reaction follows the reaction formula of N₂ + 3H₂ → 2NH₃. Therefore, the theoretical molar ratio of a hydrogen gas and a nitrogen gas is 3. However, in an actual process, it is preferable to supply hydrogen in excess to shift the equilibrium of the reaction and improve the conversion rate. In addition, energy efficiency can be improved by supplying the steam generated by combusting the combustion gas in the preheater 310 to the gas mixer 320 and using the steam to indirectly heat the mixed gas.

The ammonia synthesis reactor 330 is a device that receives the mixed gas stream produced in the gas mixer 320 and synthesizes ammonia using a catalyst. The inside of the ammonia synthesis reactor 330 is maintained at a temperature of 400 degrees C to 500 degrees C and a pressure of approximately 200 bar. The temperature and pressure conditions of the ammonia synthesis reactor 330 are optimized in consideration of the reaction rate of the ammonia synthesis reaction and the heat exchange efficiency inside the reactor. If the internal temperature and pressure are below the lower limits, the reaction rate and yield of ammonia synthesis are significantly reduced, and if they exceed upper limits, the internal exothermic temperature increases and the heat exchange efficiency decreases, which may deactivate the catalyst. The high-pressure hydrogen having a pressure in the range of 200 bar to 300 bar supplied by the chemical compressor 200 can directly satisfy the pressure conditions required for ammonia synthesis without additional pressurization, thereby simplifying the system configuration and improving energy efficiency compared to the existing multi-stage mechanical compression method. In addition, since the hydrogen supplied from the chemical compressor 200 has a high purity of 99.99% or more, it can be directly used for ammonia synthesis without a separate PSA purification process.

The condenser/gas-liquid separator 340 is a device that liquefies and separates ammonia generated in the ammonia synthesis reactor 330 and recirculates steam waste heat and unreacted gas. The condenser cools the synthesis gas supplied from the ammonia synthesis reactor 330 to liquefy ammonia, and the gas-liquid separator separates liquefied ammonia and unreacted gas and recirculates them to the gas mixer 320. In addition, the gaseous ammonia separated in the gas-liquid separator can be injected as a combustion gas into the preheater 310. This recycling process has the effect of improving the yield of the overall process through the reuse of the unreacted gas. In addition, the steam waste heat generated in the condenser/gas-liquid separator 340 is transferred to the high-pressure water supply part 250 and recycled as a heat source for the chemical compressor 200.

As indicated by the dotted line at the lower right end in FIG. 3, the steam waste heat generated in the condenser/gas-liquid separator 340 is transferred to the high-pressure water supply part 250. The high-pressure water supply part 250 transfers the steam waste heat to water through a heat exchanger. Then, the heated water is prerssurized with a high-pressure pump system to produce high-pressure water having a temperature of 200 degrees C to 300 degrees C and a pressure of 16 bar to 90 bar. This high-pressure water is supplied to the high-pressure water heating part 231 of the chemical compressor 200 and used to heat the hydrogen storage alloy. In addition, as indicated by the dotted line at the lower left end in FIG. 3, surplus power from a renewable energy generator may also be supplied to the high-frequency generator 260. The high-frequency generator 260 receives the surplus power directly from the renewable energy generator to generate a high-frequency induction current, which is supplied to the high-frequency induction heating part 233 of the chemical compressor 200 and used to heat the hydrogen storage alloy 212 with induction heat.

The control part 240 independently controls the output of the high-pressure water heating part 231 and the high-frequency induction heating part 233 based on the amount of steam waste heat generated by the ammonia synthesis part 300 and the surplus power generated by a renewable energy generator. Specifically, the control part 240 monitors the amount of steam waste heat generated by the condenser/gas-liquid separator 340 in real time, and optimizes energy efficiency by reducing the output of the high-frequency induction heating part 233 when the amount of steam waste heat generated increases and by increasing the output of the high-frequency induction heating part 233 when the amount of steam waste heat generated decreases. This complementary control method can implement a system that can flexibly respond to changes in the availability of energy sources. The control part 240 is composed of a microprocessor, a memory, an input/output device, a communication interface, and the like. The control part 240 collects process data from various sensors in real time, analyzes the process data, and outputs an optimal control command. Control algorithms such as PID (Proportional-Integral-Derivative) control, fuzzy logic control, or model predictive control may be applied, which makes it possible to optimize the stability and efficiency of the system.

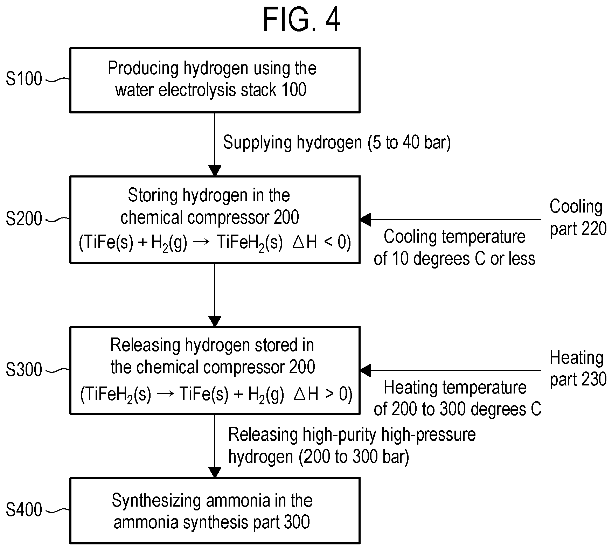

FIG. 4 is a schematic diagram showing steps of an ammonia synthesis method using the chemical compressor 200 according to the present disclosure.

Referring to FIG. 4, the ammonia synthesis method according to the present disclosure includes step S100 of producing hydrogen using a water electrolysis stack 100, step S200 of storing the hydrogen produced from the water electrolysis stack 100 in a chemical compressor 200, step S300 of releasing the hydrogen stored in the chemical compressor 200, and step S400 of synthesizing ammonia in an ammonia synthesis part 300 by receiving the hydrogen from the chemical compressor 200.

In step S100 of producing hydrogen using the water electrolysis stack 100, hydrogen is produced by electrolyzing water using surplus power from a renewable energy generator through one of AWE, PEMWE, AEMWE, or SOEC electrolysis methods. According to one embodiment of the present disclosure, the hydrogen produced from the water electrolysis stack 100 may have a pressure in the range of 5 bar to 40 bar. If the pressure is less than 5 bar, the hydrogen storage alloy 212 in the chemical compressor 200 may not sufficiently absorb the hydrogen, resulting in a decrease in storage capacity, and the rate of hydrogen absorption may decrease due to the low differential pressure. If the pressure exceeds 40 bar, the hydrogen storage capacity of the hydrogen storage alloy 212 increases. However, there is a limitation that it is difficult for the hydrogen pressure to exceed 40 bar in the case of hydrogen produced from a general AWE, PEMWE, AEMWE, or SOEC stack. The hydrogen produced in the water electrolysis stack 100 is supplied to the chemical compressor 200.

In step S200 of storing the hydrogen produced from the water electrolysis stack 100 in the chemical compressor 200, the hydrogen supplied from the water electrolysis stack 100 reacts with the hydrogen storage alloy 212 in the chemical compressor 200 and is stored in the form of a metal hydride. When hydrogen reacts with a Ti-based hydrogen storage alloy (e.g., TiFe, TiMn₂, Ti_{0.5}Zr_{0.5}Mn₂, TiCr₂, etc.), atomic hydrogen invades the space within the metal crystal lattice, particularly the interstitial site, thereby forming a metal hydride. For example, when TiFe is used as the hydrogen storage alloy 212, the hydrogen storage process may be expressed by the following chemical reaction formula.$TiFe \left(s\right) + {H}_{2} \left(g\right) \to {TiFeH}_{2} \left(s\right) Δ H < 0$

This reaction is exothermic, and heat is released. Therefore, it is essential to remove the heat of reaction by supplying cooling water of 10 degrees C or less through the cooling part 220. Through this, the temperature of the TiFe hydrogen storage alloy 212 is maintained at 20 degrees C to 50 degrees C, and the hydrogen storage efficiency is optimized in this temperature range. When the temperature of the hydrogen storage alloy 212 exceeds 50 degrees C, the equilibrium pressure for the hydrogen storage alloy 212 to absorb hydrogen increases, and therefore the hydrogen storage capacity decreases. On the other hand, when the temperature of the hydrogen storage alloy 212 is less than 20 degrees C, the equilibrium pressure for absorbing hydrogen decreases, and therefore a large amount of hydrogen can be stored. However, since the cooling system must be continuously operated due to the difference between the temperature of the heat generated continuously during the hydrogen absorption process and the ambient temperature (room temperature of 20 degrees C to 25 degrees C), there is a disadvantage in that a lot of energy is consumed for cooling.

In step S300 of releasing the hydrogen stored in the chemical compressor 200, the hydrogen stored in the chemical compressor 200 is released by heating the hydrogen storage alloy 212. Specifically, the control part 240 of the chemical compressor 200 controls the heating part 230 to heat the hydrogen storage alloy 212 by at least one of a plurality of different heating sources that can be independently controlled, thereby decomposing the metal hydride and releasing hydrogen. The high-pressure water heating part 231 or the high-frequency induction heating part 233 is used as a heating source. The high-pressure water heating part 231 uses high-pressure water produced using steam waste heat generated in the ammonia synthesis part 300 as a heat source, and the high-frequency induction heating part 233 uses a high-frequency induction heating method using surplus power from a renewable energy generator. The hydrogen release process may be expressed by the following chemical reaction formula${TiFeH}_{2} \left(s\right) \to TiFe \left(s\right) + {H}_{2} \left(g\right) Δ H > 0$

This reaction is an endothermic reaction, and sufficient heat must be supplied internally and externally to promote the reaction. Therefore, the TiFe hydrogen storage alloy is heated to a temperature of 200 degrees C to 300 degrees C through the heating part 230. The pressure of the hydrogen released from the hydrogen storage alloy 212 is in the range of 200 bar to 300 bar, which can satisfy the pressure conditions required for ammonia synthesis. The released high-purity high-pressure hydrogen is supplied to the ammonia synthesis part 300 and utilized for ammonia synthesis.

Step S400 of synthesizing ammonia in the ammonia synthesis part 300 by receiving hydrogen from the chemical compressor 200 includes a step of preheating hydrogen and nitrogen supplied from the chemical compressor 200 in a preheater 310, a step of mixing the preheated hydrogen and nitrogen in a gas mixer 320, a step of supplying the mixed gas produced in the gas mixer 320 to an ammonia synthesis reactor 330 to synthesize ammonia, and a step of liquefying and separating ammonia produced in the ammonia synthesis reactor 330 in a condenser/gas-liquid separator 340 and recovering steam waste heat. The ammonia synthesis method according to the present disclosure can implement a carbon-free heating system that does not emit carbon dioxide at all by using a mixed gas of hydrogen and air or a mixed gas of hydrogen, ammonia and air as a combustion gas in the preheater 310, and at the same time, the steam waste heat recovered in the condenser/gas-liquid separator 340 can be recycled as a heat source for the chemical compressor 200, thereby improving the energy efficiency of the entire system. In addition, the direct supply of high-purity hydrogen and the recirculation of unreacted gas can increase resource utilization and simplify the process, thereby improving the economic feasibility and environmental friendliness of green ammonia production.

The chemical compressor 200 having the built-in hydrogen storage alloy 212 according to the present disclosure can safely produce high-pressure hydrogen using the single compression method, which is simpler than the mechanical compressor, by utilizing a hydrogen storage and release mechanism. In addition, the structure is simple because there are no mechanical operating parts, and the initial construction cost and maintenance cost are low. Since no impurities are mixed, high-purity hydrogen of 99.99% or more can be obtained without a separate PSA purification process. In addition, since the pressure of the released hydrogen can be precisely controlled by changing the composition of the hydrogen storage alloy 212 and controlling the heating temperature, it can be utilized to provide customized high-pressure hydrogen for various industrial applications such as hydrogen charging stations, fuel cells, combined cycle power plants, and hydrogen mixed-fuel gas turbines.

The ammonia synthesis system and method using the chemical compressor 200 having the built-in hydrogen storage alloy 212 according to the present disclosure can improve energy efficiency by complementarily using two different heating sources, namely, the high-pressure water heating part 231 and the high-frequency induction heating part 233. In particular, the steam waste heat generated in the ammonia synthesis part 300 is recycled in the form of high-pressure water, and the surplus power of the renewable energy generator is utilized for high-frequency induction heating, thereby increasing the energy circulation efficiency of the entire system. In addition, the economic feasibility of the process can be improved by maximizing resource utilization through the recirculation of unreacted gas and utilization of combustion gas of gaseous ammonia. In particular, sustainable ammonia production based on green energy is possible through the control system that can flexibly respond to the volatility of renewable energy generator.

Although the embodiments of the present disclosure have been described with reference to the attached drawings, those skilled in the art would appreciate that the present disclosure may be implemented in other specific forms without altering the technical scope or essential characteristics thereof.

Therefore, the embodiments described above should be understood as exemplary and not limitative in all respects. The scope of the present disclosure is defined by the claims rather than the detailed description, and all changes or modifications derived from the meaning and scope of the claims and their equivalents should be construed as being included within the scope of the present disclosure.

## Claims

1. An ammonia synthesis system using a chemical compressor having a built-in hydrogen storage alloy, comprising:
a water electrolysis stack configured to produce hydrogen;
a chemical compressor configured to store and release the hydrogen supplied from the water electrolysis stack; and
an ammonia synthesis part configured to receive the hydrogen from the chemical compressor and synthesizes ammonia,
wherein the chemical compressor includes a hydrogen storage part having the hydrogen storage alloy therein, a cooling part configured to cool the hydrogen storage part, a heating part configured to heat the hydrogen storage part, and a control part configured to control operations of the cooling part and the heating part,
the heating part includes a plurality of independently-controllable different heating sources, and
the control part controls the cooling part to cool the hydrogen storage alloy of the hydrogen storage part when storing the hydrogen in the hydrogen storage part, and controls at least one of the plurality of heating sources of the heating part to heat the hydrogen storage alloy when releasing the hydrogen from the hydrogen storage part.

2. The system of Claim 1, wherein the hydrogen storage part includes a pressure vessel, a hydrogen storage alloy built into the pressure vessel, a hydrogen supply pipe configured to supply the hydrogen produced from the water electrolysis stack into the pressure vessel, and a hydrogen discharge pipe configured to discharge the hydrogen released from the hydrogen storage alloy to the outside of the pressure vessel.

3. The system of Claim 1 or 2, wherein the hydrogen storage alloy is a Ti-based alloy, and contains one or more transition metals selected from Mn, Zr, Cr, V, Nb, Mo, Al, Fe, Co, Ni, Cu, Sn and Si.

4. The system of Claim 1 or 2, wherein the cooling part includes one or more cooling water supply lines installed in the hydrogen storage part and configured to circulate cooling water having a temperature of 10 degrees C.

5. The system of Claim 1, wherein the heating part includes a high-pressure water heating part or a high-frequency induction heating part as the plurality of different heating sources.

6. The system of Claim 5, wherein the high-pressure water heating part includes a high-pressure water circulation line installed in the hydrogen storage part, is linked to a high-pressure water supply part configured to produce high-pressure water using steam waste heat generated in the ammonia synthesis part, and is configured to heat the hydrogen storage alloy by circulating the high-pressure water supplied from the high-pressure water supply part through the high-pressure water circulation line.

7. The system of Claim 6, wherein the high-pressure water has a temperature of 200 degrees C to 300 degrees C and a pressure of 16 bar to 90 bar.

8. The system of Claim 5, wherein the high-frequency induction heating part includes an induction coil installed outside the chemical compressor, and
the induction coil is connected to a high-frequency generator configured to receive surplus power from a renewable energy generator and configured to heat the hydrogen storage alloy with induction heat by utilizing a high-frequency induction current supplied from the high-frequency generator.

9. The system of Claim 1, wherein the ammonia synthesis part includes a preheater configured to preheat the hydrogen and nitrogen supplied from the chemical compressor, a gas mixer configured to mix the preheated hydrogen and nitrogen, an ammonia synthesis reactor configured to synthesize ammonia by receiving the mixed gas produced in the gas mixer, and a condenser/gas-liquid separator configured to liquefy and separate the ammonia produced in the ammonia synthesis reactor and recover steam waste heat.

10. The system of Claim 5, wherein the control part is configured to control the output of the high-pressure water heating part and the high-frequency induction heating part based on the amount of steam waste heat generated by the ammonia synthesis part and the surplus power generated by a renewable energy generator, and is configured to reduce the output of the high-frequency induction heating part when the amount of steam waste heat generated increases, and increase the output of the high-frequency induction heating part when the amount of steam waste heat generated decreases.

11. An ammonia synthesis method using a chemical compressor having a built-in hydrogen storage alloy, comprising:
producing hydrogen using a water electrolysis stack;
storing the hydrogen produced from the water electrolysis stack in a chemical compressor;
releasing the hydrogen stored in the chemical compressor; and
synthesizing ammonia in an ammonia synthesis part using the hydrogen supplied from the chemical compressor,
wherein the storing the hydrogen in the chemical compressor includes supplying the hydrogen to a hydrogen storage part containing the hydrogen storage alloy, and cooling the hydrogen storage alloy of the hydrogen storage part by controlling a cooling part with a control part of the chemical compressor when storing the hydrogen in the hydrogen storage part, and
the releasing the hydrogen stored in the chemical compressor includes heating the hydrogen storage alloy by at least one of a plurality of independently-controllable different heating sources by controlling a heating part with the control part of the chemical compressor.

12. The method of Claim 11, wherein the water electrolysis stack produces hydrogen by using surplus power from a renewable energy generator through one of water electrolysis methods selected from AWE (Alkaline Water Electrolysis), PEMWE (Proton Exchange Membrane Water Electrolysis), AEMWE (Anion Exchange Membrane Water Electrolysis), and SOEC (Solid Oxide Electrolysis Cell).

13. The method of Claim 11, wherein the plurality of different heating sources of the heating part performs heating by a high-pressure water heating method or a high-frequency induction heating method.

14. The method of Claim 13, wherein the high-pressure water heating method heats the hydrogen storage alloy by circulating high-pressure water produced using steam waste heat generated in the ammonia synthesis part through a high-pressure water circulation line installed in the hydrogen storage part.

15. The method of Claim 14, wherein the high-pressure water has a temperature of 200 degrees C to 300 degrees C and a pressure of 16 bar to 90 bar.

16. The method of Claim 13, wherein the high-frequency induction heating method heats the hydrogen storage alloy with induction heat by supplying a high-frequency induction current generated from a high-frequency generator that receives surplus power from a renewable energy generator to an induction coil installed outside the chemical compressor.

17. The method of Claim 13, wherein the control part is configured to control the output of the high-pressure water heating method and the high-frequency induction heating method based on the amount of steam waste heat generated by the ammonia synthesis part and the surplus power generated by a renewable energy generator, and is configured to reduce the output of the high-frequency induction heating method when the amount of steam waste heat generated increases, and increase the output of the high-frequency induction heating method when the amount of steam waste heat generated decreases.

18. The method of Claim 11, wherein in the heating the hydrogen storage alloy, the heating temperature of the hydrogen storage alloy is 200 degrees C to 300 degrees C.

19. The method of Claim 11, wherein the pressure of the hydrogen released from the hydrogen storage alloy is 200 bar to 300 bar.

20. The method of Claim 11 or 12, wherein the synthesizing ammonia in the ammonia synthesis part by receiving the hydrogen from the chemical compressor includes preheating the hydrogen and nitrogen supplied from the chemical compressor in a preheater, mixing the preheated hydrogen and nitrogen in a gas mixer, supplying the mixed gas produced in the gas mixer to an ammonia synthesis reactor to synthesize ammonia, and liquefying and separating the ammonia produced in the ammonia synthesis reactor in a condenser/gas-liquid separator and recovering steam waste heat.
